# EUROPEAN PATENT APPLICATION

(11) **EP 1 816 078 A1**
(43) Date of publication of application: **08.08.2007**
(21) Application number: 06075232.6
(22) Date of filing: 01.02.2006
(51) Int. Cl.: B65C 1/02, B65G 60/00

(54) **Method and apparatus for applying labels to stacked covers**

(71) Applicant: Van der Laan, Paulus Maria, 2461 EX Ter Aar (NL)
(72) Inventor: Van der Laan, Paulus Maria, 2461 EX Ter Aar (NL)
(74) Representative: Lips, Hendrik Jan George

(57) **Abstract**

The invention concerns a method and apparatus to provide stacks (4) of approximately 50 covers with a sticker/label (2), which covers (3) are sealed together at one side, in which an automatized supply is executed by a conveyor belt (6) to a device (1) with clamping means (8) and a machine (9) for applying the stickers or labels (2), after which a suction cup (11) turns the cover (3) up and a horizontally working S-shaped swivelling arm (12) turns the concerned cover (3) over and so on, until all covers (3) are provided with a sticker or label (2), after which the clamp mechanism (8) releases and the stack (4) of covers (3) is discharged by the discharge conveyor belt (13).

## Description

The present invention relates to a work method for sticking/labelling one by one and turning over successive covers, which are supplied in a stack and are sealed at one side.

Also, the invention relates to an apparatus for the execution of the work method according to claim 1.

The applying of stickers/labels on covers is momentarily mainly done by hand, for which unskilled employees are necessary to execute the monotonous handlings. In practice, it concerns stacks of approximately 50 covers, which are melted or sealed to each other at one side and which stacks of covers are used in large quantities for packing mostly flower bouquets and plants. For the market, the covers must be supplied with stickers provided with price and further instructions and such in certain amounts. Further, the covers are produced blank in large amounts to be used by several purchasers. So, in order to apply large amounts of covers, which are not specifically pre-printed, with a suitable sticker each time at the same position, is enormously labour-intensive and very drudgery. In practice, one wishes to apply required stickers/labels on different amounts of packets of covers quickly.

It is the aim of the present invention to automatize the aforementioned production process and this in such a way, that every time the required stickers are put at exact the same position on the covers without intervention of human hands and which can be delivered quickly in large quantities.

For this, firstly a work method is developed in which several handlings must be executed in order, for which several devices are developed together with a specific cover turnover unit according to the invention. The cover turnover unit therefore forms the core of the work method and apparatus to apply the sticker at the right position on the individual covers supplied stack-wise.

The work method according to the invention for applying stickers/labels on individual covers is further developed in a very inventive way, characterized in that, the mentioned stacks of covers, which are usually connected to each other with tear-off edges in packets of approximately 50 covers, are supplied against stop lips and then the packet is clamped with a clamp mechanism after which a stamping machine sticks the sticker/label on the top cover, after which a suction cup pulls or turns the cover up and following an S-shaped swivelling arm turns the labelled cover over, after which the process repeats itself until all covers are provided with a sticker, after which the stack of covers is released from the clamp mechanism and is discharged horizontally.

The aim of the invention can be achieved on a very efficient and flexible way, so that every time large quantities of covers can be provided with a specific sticker in an automatized manner.

Further, an apparatus according to the invention is further developed for executing the work method mentioned before and described in claim 1, characterized in that, the mentioned device is constructed of the following main parts, a supply conveyor belt with guiding, specially upwardly turnable stop means for laying and positioning the stacks of covers, in which a clamp mechanism is applied at the tear-off seal edge, in order to attach the covers to the apparatus, a machine for applying mentioned stickers, a vacuum pipe with suction cup, a horizontally working S-shaped swivelling arm and a discharge conveyor belt.

The advantage is a compact and effective apparatus, which can be placed at the purchaser in a simple way in order to process large quantities of covers.

Furthermore, the apparatus according to the invention is further developed in such a way, that the mentioned specially upwardly turnable stop means are constructed of automatic hingeable lips, which hinge upwardly at the arrival of a stack of covers for a complete vertical stop, in which the mentioned clamp mechanism is a moveable roller, which clamps the stacks of covers at the mentioned tear off seal edge against the edge strip of mentioned supply conveyor belt.

The advantage is an efficiently and gently running machine, which applies stickers cover after cover in a fast way, in which the whole cycle is processed per stack of covers, after which the stack is released and leaves the apparatus by means of a second conveyor belt.

The preferred construction of the invention will be described by way of example, and with reference to the accompanying drawing.

In which:
- Fig. 1: shows a top view in oblique projection of the set-up of the apparatus according to the invention in a preferred set-up for executing the work method; and
- Fig. 2A up to 2D: show top views of the apparatus of figure 1, indicating the different steps for applying stickers on the individual covers, which are offered sealed to each other in packages.

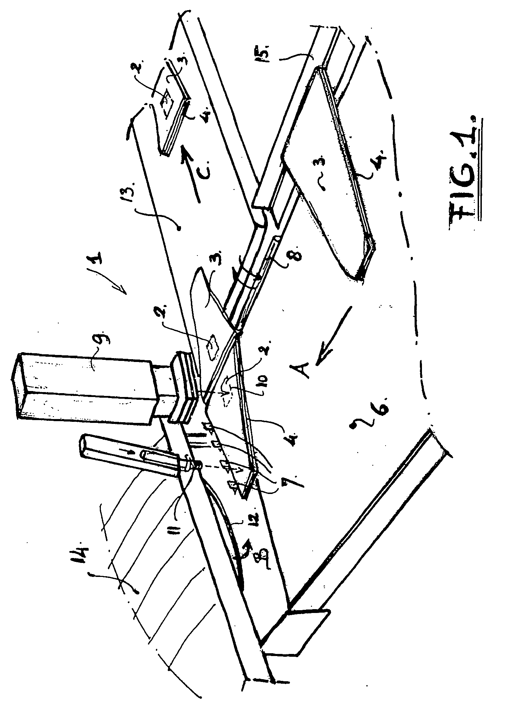

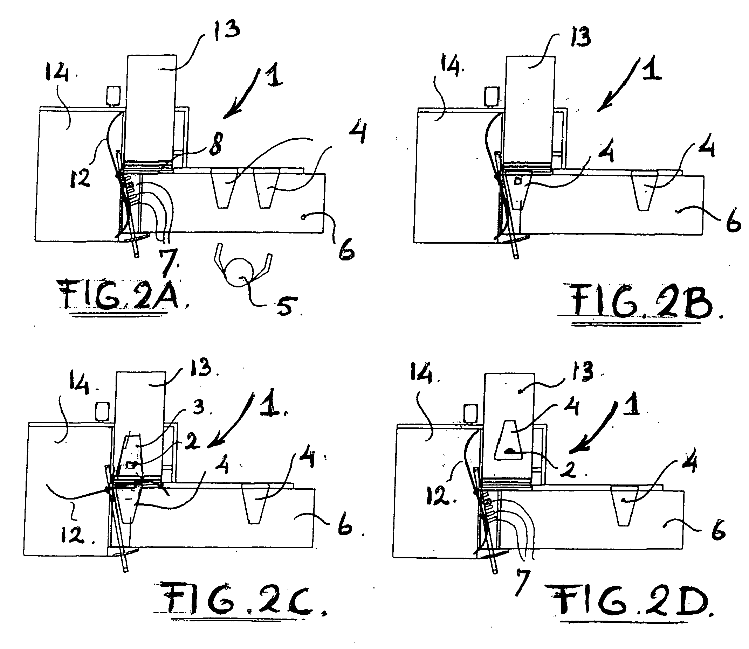

In figures 1 and 2A up to 2D 1 indicates the total apparatus for applying stickers 2 on the individual covers 3 supplied in stacks 4. The stacks 4 with covers are laid on the first or supply conveyor belt by a pressing mould 5 (see figure 2A), against the steel bar 15 with an L cross-section for guidance, which moves in the arrow direction A. Following, the stacks 4 with covers become situated against the upwards turnable stop means 7 and are then clamped with the clamp roller 8. Following, the stamping machine 9 moves downwards and applies a sticker 2 on the cover 3 at position 10, after which a vacuum device with suction cup 11 lifts an individual cover 3, and the S-shaped swivelling arm 12 with turning direction B turns the cover 3 over and the cover 3 lands on the second or discharge conveyor belt 13 with moving direction C. After the whole stack of covers is provided with a sticker and turned over, the clamp roller 8 releases and the stack 4 of covers 3 is further discharged to be used in another machine. Above the swivelling arm 12 a cover 14 is mounted to protect the personnel.

Figures 2A up to 2D show the different steps of the work method or the process. In the successive steps it can be seen that the stack 4 of covers lies against the upright upwardly turneable stop means 7 and following the individual covers 3 are provided with a sticker 2 and following turned over by the suction cup 11 and the S-shaped swivelling arm 12 and then the stack 4 of covers is discharged by means of the discharge conveyor 13.

Finally it has to be emphasized, that the above description constitutes preferred embodiments of the work method and apparatus and that further modifications are possible without departing the scope of this patent document.

## Claims

1. Work method for sticking/labelling one by one and turning over successive covers, which are supplied in a stack and are sealed together at one side, **characterized in that**, the mentioned stacks (4) of covers (3), which are usually connected to each other with tear-off edges in packets (4) of approximately 50 covers (3), are supplied against stop lips (7) and then the packet (4) is clamped with a clamp mechanism after which a stamping machine (9) sticks the sticker/label (2) on the top cover (3), after which a suction cup (11) pulls or turns the cover (3) up and following an S-shaped swivelling arm (12) turns the labelled cover (3) over, after which the process repeats itself until all covers are provided with a sticker, after which the stack (4) of covers (3) is released from the clamp mechanism (8) and is discharged horizontally.

2. Work method as claimed in claim 1, **characterized in that**, the supply and discharge of the stacks (4) of covers (3) is done by means of almost horizontally set-up conveyor belts (6, 13).

3. Work method as claimed in claims 1-2, **characterized in that**, the mentioned supply and discharge conveyor belts (6, 13) are mounted almost perpendicular to each other in top view in an almost horizontal plane for a smooth supply and discharge.

4. Apparatus for executing the work method to apply stickers/labels and turning over stacks (4) of covers (3) as claimed in claims 1-3, **characterized in that**, the mentioned device is constructed of the following main parts, a supply conveyor belt (6) with guiding (15), specially upwardly turnable stop means (7) for laying and positioning the stacks (4) of covers (3), in which a clamp mechanism is applied at the tear-off seal edge in order to attach the covers (3) to the apparatus, a machine (9) for applying mentioned stickers (2), a vacuum pipe with suction cup (11), a horizontally working S-shaped swivelling arm (12) and a discharge conveyor belt (13).

5. Apparatus as claimed in claim 4, **characterized in that**, the mentioned special upwardly turnable stop means (7) are constructed of automatic hingeable lips, which hinge upwardly at the arrival of a stack (4) of covers (3) for a complete vertical stop.

6. Apparatus as claimed in claim 4, **characterized in that**, the mentioned clamp mechanism (8) is a moveable roller, which clamps the stacks (4) of covers (3) at the mentioned tear off seal edge against the edge strip of mentioned supply conveyor belt (6).

7. Apparatus as claimed in claim 4, **characterized in that**, the mentioned horizontally working S-shaped swivelling arm (12) is turnable uniformly in such a way that every time a cover (3) provided with a sticker (2) is pulled up from the clamped stack of covers by the suction cup (11) and can be turned over by the S-shaped swivelling arm (12) in a smooth movement.

8. Apparatus as claimed in aforementioned claims, **characterized in that**, the whole described process or work method with the device is controlled by a programmed processor.
